# EUROPÄISCHE PATENTSCHRIFT

(11) **EP 0 451 548 B1**
(45) Veröffentlichungstag und Bekanntmachung des Hinweises auf die Patenterteilung: **01.06.1994**
(21) Anmeldenummer: 91104193.7
(22) Anmeldetag: 19.03.1991
(51) Int. Cl.: B60Q 3/02

(54) **Innenleuchte**
Interior light
Lampe intérieure

(30) Priorität: 11.04.1990 DE 4011641
(43) Veröffentlichungstag der Anmeldung: 16.10.1991
(73) Patentinhaber: Hella KG Hueck & Co., 59552 Lippstadt (DE)
(72) Erfinder: Rafalzik, Siegfried, W-4780 Lippstadt (DE)

(56) Entgegenhaltungen:
- DE-A- 3 116 757
- DE-A- 3 323 236
- US-A- 4 872 099

## Beschreibung

Die Erfindung bezieht sich auf eine Innenleuchte für Kraftfahrzeuge, mit einer über eine Rastvorrichtung verrasteten Lichtscheibe und einem die Verrastung lösbaren Verrastungsmittel.

Eine Leuchte dieser Art ist aus der DE-PS 12 03 625 bekannt. Hier ist die Einschaltvorrichtung der Leuchte gleichzeitig als Entrastungshebel vorgesehen, was bei Dunkelheit oder unkonzentrierter Bedienung zur ungewollten Entrastung der Lichtscheibe aus ihrer Verrastung führen kann. Ein weiterer Nachteil dieser Leuchte besteht darin, daß bei oftmaliger Biegebeanspruchung des Entrastungshebels durch Ermüdung des Kunststoffs Materialbruch entstehen kann, der dann nicht nur die Demontage ohne Werkzeug ausschließt, sondern auch die Bedienbarkeit der Leuchte unmöglich macht.

Es ist deshalb Aufgabe der Erfindung, zum Lösen von Lichtscheiben eine Hilfsvorrichtung zu schaffen, die den Rand der Lichtscheibe hintergreift, um sie ohne eine unkontrollierbare Krafteinwirkung zu entrasten und die losgelöst ist von der Einschaltvorrichtung, um sich nicht der Gefahr auszusetzen, daß bei deren Betätigung ein ungewolltes Lösen der Lichtscheibe erfolgt.

Diese Aufgabe wird erfindungsgemäß dadurch gelöst, daß
- die Leuchte ein Gehäuse aufweist, das in mehreren Kammern unterteilt ist,
- die einzelnen Kammern mit separaten Lichtscheiben abgedeckt sind,
- an der Trennwand zwischen den Kammern ein parallel zu der Trennwand verlaufender, zweiarmiger Hebel angebracht ist, der etwa parallel zu einer Seitenkante einer Lichtscheibe verläuft,
- der Hebel im Bereich des ersten Hebelarms einen in das Kammerinnere gerichteten Vorsprung aufweist, der unterhalb einer Unterkante einer Lichtscheibe liegt,
- der Hebel von außen frei zugänglich zwischen den die beiden Kammern abdeckenden Lichtscheiben verläuft,
- durch Hereindrücken des zweiten Hebelarms der Vorsprung des ersten Hebelarms unter die Unterkante der Lichtscheibe stößt.

Durch das Entrasten einer Lichtscheibe ist es möglich, die Glühlampen zweier Leuchtenkammern auszutauschen, da die Glühlampe der benachbarten Kammer zum Teil durch die beide Kammern trennende Zwischenwand mit ihrem Fassungsteil hindurchragt und ebenfalls durch die geöffnete Kammer lösbar ist. Dazu ist im Hebel eine Ausnehmung eingebracht, die nach Form und Größe dem Fassungsteil der Glühlampe entspricht.

Weiterhin ist es vorteilhaft, daß der Vorsprung die Form eines an den ersten Hebelarm angeformten, zylindrischen Zapfens aufweist. Dieser läßt sich werkzeugtechnisch einfach bei der Herstellung verwirklichen und erzeugt durch seine an der Lichtscheibe anliegenden, kreiszylindrischen Umfangsfläche nur einen geringen Reibwiderstand durch Linienberührung.

Desweiteren ist es zweckmäßig, daß der Vorsprung in der Nähe eines Verrastungspunktes der Lichtscheibe angeordnet ist. Infolgedessen kann die wirksame Lösungskraft unmittelbar auf die Verrastungsstelle einwirken, ohne die Lichtscheibe zu verwinden oder zu verbiegen.

Ebenfalls vorteilhaft, zeigt sich die Ausführungsform, bei der das Hebelverhältnis zwischen dem ersten und dem zweiten Hebelarm etwa 1:1 beträgt, was die Kraftwirkung in kontrollierbaren Grenzen hält und eine Beschädigung weitestgehend verhindert.

Eine andere vorteilhafte Ausführung erspart eine unnötige Halterung des Hebels auf seiner Schwenkachse, indem die stirnseitigen Enden beider Hebelarme in der Gehäusewandung nach der Art von Nut und Feder geführt werden. Durch Begrenzung der Führung des zweiten Hebelarms im hinteren Teil der Leuchtenkammer ist auch eine Begrenzung der Ausschwenkung für den ersten Hebelarm gegen die Lichtscheibe gegeben.

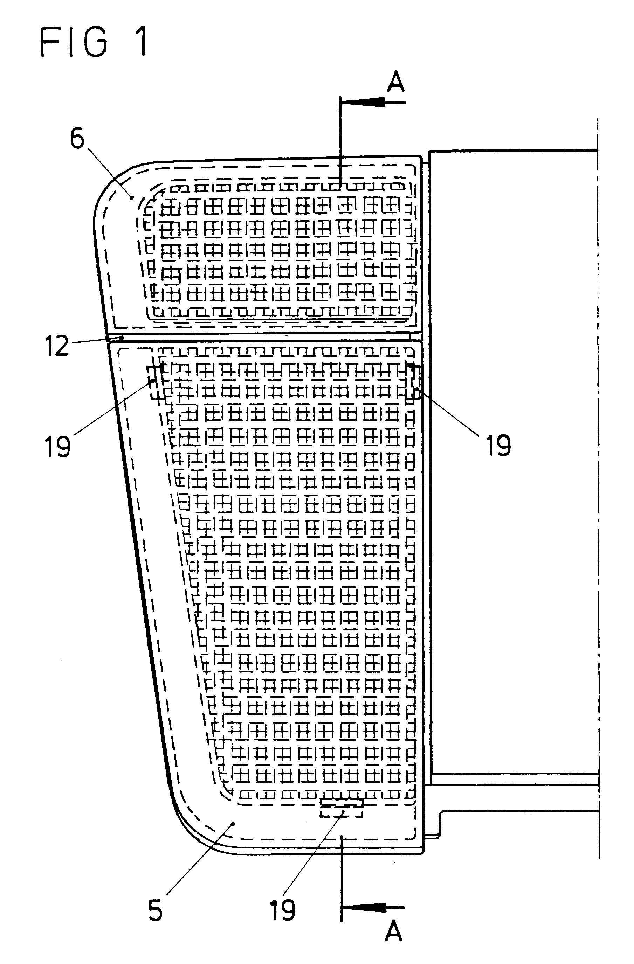

Die Erfindung wird anhand einer Zeichnung näher erläutert. Darin zeigen
- Figur 1: eine Ansicht auf die Frontseite der Innenleuchte,

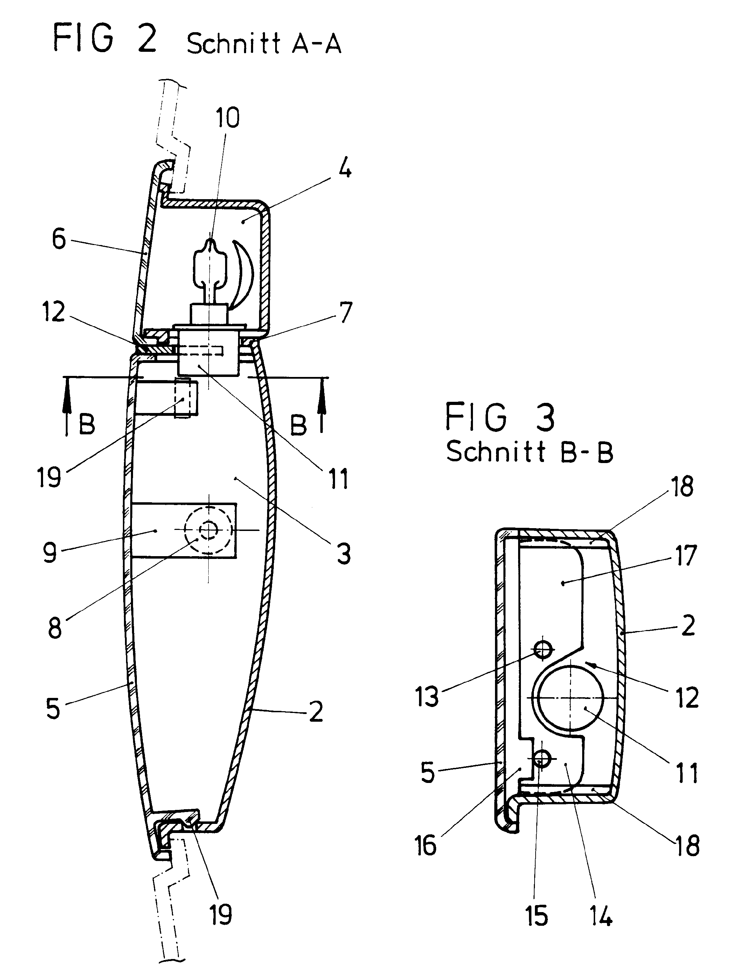

- Figur 2: einen Teilschnitt nach der Linie A-A in Figur 1,
- Figur 3: einen Teilschnitt nach der Linie B-B in Figur 2.

Die Innenleuchte (1) setzt sich aus einem Gehäuse (2), welches in separate Kammern (3, 4) unterteilt ist, zusammen. Die Kammern (3, 4) sind mit Lichtscheiben (5, 6) abgedeckt. Eine Trennwand (7) teilt die beiden Kammern (3, 4) und Lichtscheiben (5, 6) voneinander ab. In der Kammer (3) befindet sich eine Glühlampe (8) mit Halterungs- und Kontaktteilen (9). In der benachbarten Kammer (4) befindet sich ebenfalls eine Glühlampe (10), die mit ihrem Sockel in einem Fassungsteil (11) in die Trennwand (7) eingesetzt ist. Entlang der Trennwand (7) in Kammer (3) und außerhalb zwischen den Lichtscheiben (5, 6) verläuft ein zweiarmiger Hebel (12). Seine Schwenkachse ist ein Zapfen (13) der an der Trennwand (7) befestigt ist. Im Bereich des ersten Hebelarmes (14) befindet sich ein daran angeformter kreiszylindrischer Zapfen (15), der unterhalb einer Kante an einem Vorsprung (16) der Lichtscheibe (5) anliegt und in Richtung der Lichtscheibe (5) bewegbar ist. Der zweite Hebelarm (17) ist in die Kammer (3) hineinschwenkbar. Die stirnseitigen Enden der Hebelarme (17, 14) sind abgerundet und gleiten in Führungen (18). Mit (19) sind mehrere am Lichtscheibenrand (5) befindliche Verrastungen bezeichnet. Die Entrastung der Lichtscheibe (5) erfolgt nun in der Weise, indem man einen flachen Gegenstand, beispielsweise eine Geldmünze, im Bereich des zweiten Hebels (17) zwischen die beiden Lichtscheiben (5, 6) drückt. Die Folge ist, daß der erste Hebelarm (14) mit seinem kreiszylindrischen Zapfen (15) gegen den Vorsprung (16) der Lichtscheibe (5) drückt und diese aus einer der in der Nähe befindlichen Verrastungen (19) hinausdrückt. Danach kann die Lichtscheibe (5) leicht abgenommen werden und so die Glühlampe (8) gewechselt werden. Im Bedarfsfall läßt sich auch jetzt bei geöffneter Kammer (3) die Fassung (11) mit Glühlampe (10) aus der Kammer (4) durch die Kammer (3) hindurch auswechseln.

## Patentansprüche

1. Innenleuchte für Kraftfahrzeuge, mit einer über eine Rastvorrichtung verrasteten Lichtscheibe und einem die Verrastung lösbaren Verrastungsmittel, gekennzeichnet durch folgende Merkmale:
a) die Leuchte (1) weist ein Gehäuse (2) auf, das in mehrere Kammern (3, 4) unterteilt ist,
b) die einzelnen Kammern (3, 4) sind mit separaten Lichtscheiben (5, 6) abgedeckt,
c) an der Trennwand (7) zwischen den Kammern (3, 4 ) ist ein parallel zu der Trennwand (7) verlaufender, zweiarmiger Hebel (12) angebracht, der etwa parallel zu einer Seitenkante einer Lichtscheibe (5) verläuft,
d) der Hebel (12) weist im Bereich des ersten Hebelarms (14) einen in das Kammerinnere gerichteten Vorsprung (15) auf, der unterhalb einer Unterkante der Lichtscheibe (5) liegt,
e) der Hebel (12) verläuft von außen frei zugänglich zwischen denen die beiden Kammern (3, 4) abdeckenden Lichtscheiben (5, 6),
f) durch Hineindrücken des zweiten Hebelarms (17) in die Leuchte (1) stößt der Vorsprung (15) des ersten Hebelarms (14) unter die Unterkante der Lichtscheibe (5).

2. Innenleuchte nach Anspruch 1, dadurch gekennzeichnet, daß der Vorsprung (15) die Form eines an den ersten Hebelarm (14) angeformten kreiszylindrischen Zapfens aufweist.

3. Innenleuchte nach Anspruch 1 oder 2, dadurch gekennzeichnet, daß der Vorsprung (15) in der Nähe eines Verrastungspunktes (19) der Lichtscheibe (5) angeordnet ist.

4. Innenleuchte nach Anspruch 1, dadurch gekennzeichnet, daß das Hebelverhältnis zwischen erstem und zweitem Hebelarm (14, 17) etwa 1:1 beträgt.

5. Innenleuchte nach einem der vorstehenden Ansprüche, dadurch gekennzeichnet, daß die stirnseitigen Enden beider Hebelarme (14, 17) in der Gehäusewandung (2) in Führungen (18) nach der Art von Nut und Feder geführt sind.

6. Innenleuchte nach einem der vorstehenden Ansprüche, dadurch gekennzeichnet, daß der Hebel (12) eine Ausnehmung aufweist, die nach Form und Größe dem Fassungsteil (11) der Glühlampe (10) entspricht.

## Claims

1. An interior lamp for motor vehicles, with a lamp cover plate latched via a latching device and a latching means which can release the latch, characterised by the following features:
a) the lamp (1) has a housing (2) which is subdivided into a plurality of chambers (3, 4),
b) the individual chambers (3, 4) are covered by separate lamp cover plates (5, 6),
c) a two-armed lever (12) running parallel to the dividing wall (7) is disposed on the dividing wall (7) between two chambers (3, 4), and runs approximately parallel to one side edge of a lamp cover plate (5),
d) the lever (12) has a projection (15) in the region of the first lever arm (14), which projection points into the inside of the chamber and which is situated underneath a lower edge of the lamp cover plate (5),
e) the lever (12) runs, freely accessible from the outside, between the lamp cover plates (5, 6) covering the two chambers (3, 4),
f) by pressing the second lever arm (17) into the lamp (1) the projection (15) of the first lever arm (14) pushes underneath the lower edge of the lamp cover plate (5).

2. An interior lamp according to claim 1, characterised in that the projection (15) has the form of a circularly cylindrical peg integrally formed on the first lever arm (14).

3. An interior lamp according to claim 1 or 2, characterised in that the projection (15) is disposed in the vicinity of a latching point (19) of the lamp cover plate (5).

4. An interior lamp according to claim 1, characterised in that the lever ratio between the first and second lever arms (14, 17) is about 1:1.

5. An interior lamp according to any one of the preceding claims, characterised in that the terminal end faces of both lever arms (14, 17) are guided in guides (18) in the housing wall (2) in the manner of a tongue and groove.

6. An interior lamp according to any one of the preceding claims, characterised in that the lever (12) has a recess which corresponds in size and shape to the lampholder part (11) of the bulb (10).

## Revendications

1. Lampe intérieure pour véhicules automobiles, comprenant une plaque d'éclairage encliquetée au moyen d'un dispositif à encliquetage et un organe d'encliquetage capable de libérer l'encliquetage, caractérisée par les éléments suivants :
(a) la lampe (1) comprend un boîtier (2) qui est subdivisé en plusieurs chambres (3, 4),
(b) les chambres individuelles (3, 4) sont couvertes par des plaques d'éclairage séparées (5, 6),
(c) un levier à deux bras (12) est monté sur la paroi de séparation (7) entre les chambres (3, 4), ce levier s'étendant parallèlement à la paroi de séparation (7) et à peu près parallèlement à un bord latéral d'une plaque d'éclairage (5),
(d) le levier (12) présente dans la région du premier bras de levier (14) une saillie (15) dirigée à l'intérieur de la chambre, cette saillie étant située au-dessous d'une arête inférieure de la plaque d'éclairage (5),
(e) le levier (12) s'étend entre les deux plaques d'éclairage (5, 6) qui couvrent les deux chambres (3, 4) en étant librement accessible depuis l'extérieur,
(f) la saillie (15) du premier bras de levier (14) bute sous l'arête inférieure de la plaque d'éclairage (5) par enfoncement du second bras de levier (17) dans la lampe (1).

2. Lampe intérieure selon la revendication 1, caractérisée en ce que la saillie (15) a la forme d'un téton cylindrique formé sur le premier bras de levier (14).

3. Lampe intérieure selon l'une ou l'autre des revendications 1 et 2, caractérisée en ce que la saillie (15) est agencée au voisinage d'un point d'encliquetage (19) de la plaque d'éclairage (5).

4. Lampe intérieure selon la revendication 1, caractérisée en ce que le rapport entre le premier bras de levier (14) et le second (17) est environ égal à 1:1.

5. Lampe intérieure selon l'une quelconque des revendications précédentes, caractérisée en ce que les extrémités frontales des deux bras de levier (14, 17) sont guidées à la manière de ressorts dans des gorges dans des guides (18) dans la paroi (2) du boîtier.

6. Lampe intérieure selon l'une quelconque des revendications précédentes, caractérisée en ce que le levier (12) présente une ouverture qui correspond par sa forme et sa taille à la douille (11) de la lampe à incandescence (10).
